# EUROPÄISCHE PATENTANMELDUNG

(11) **EP 1 247 638 A1**
(43) Veröffentlichungstag der Anmeldung: **09.10.2002**
(21) Anmeldenummer: 02005168.6
(22) Anmeldetag: 08.03.2002
(51) Int. Cl.: B29C 65/40, B29C 65/50, B29C 37/04

(54) **Verfahren und Vorrichtung zum Stossverbinden von Profilen aus elastomerem Material**

(30) Priorität: 06.04.2001 DE 10117124
(71) Anmelder: Henniges Elastomer- und Kunststofftechnik GmbH & Co. KG., 31457 Rehburg-Loccum (DE)
(72) Erfinder: Lempfer, Christian, 31547 Rehburg-Loccum (DE); Winter, Sascha, 31832 Springe (DE)
(74) Vertreter: Siekmann, Gunnar, Dipl.-Phys.

(57) **Zusammenfassung**

Zum Stoßverbinden von Profilen (2) aus elastomerem Material, insbesondere von Dichtungsprofilen, erhalten die Profile bzw. Profilstücke in den Verbindungsbereichen Schnittflächen und werden anschließend einander so angenähert, daß zwischen den Schnittflächen (4,5) ein Bindungsspalt verbleibt, in den ein Verbindungsmaterial (15) eingebracht wird. Danach werden die Profile (2) einander weiter angenähert, bis ihre Schnittflächen (4,5) mit dem Verbindungsmaterial in verbindende Anlage gebracht sind.

Das Verbindungsmaterial (15) wird in viskosem Zustand direkt in den Bindungsspalt gedrückt, vorzugsweise als Film in den Bindungsspalt extrudiert.

## Beschreibung

Die Erfindung bezieht sich auf ein Verfahren zum Stoßverbinden von Profilen aus elastomerem Material, insbesondere von Dichtungsprofilen, bei dem die Profile bzw. Profilstücke in den Verbindungsbereichen Schnittflächen erhalten und anschließend einander so angenähert werden, daß zwischen den Schnittflächen ein Bindungsspalt verbleibt, in den ein Verbindungsmaterial eingebracht wird und die Profile anschließend einander weiter angenähert werden, bis ihre Schnittflächen mit dem Verbindungsmaterial in verbindende Anlage gebracht sind.

Die Erfindung bezieht sich auch auf eine Vorrichtung zur Durchführung des vorbeschriebenen Verfahrens.

Bei Profilen der hier in Rede stehenden Art handelt es sich zumeist um Dichtungsprofile für den Fahrzeugbau, mit denen Fenster, Klappen und Türen oder dergleichen Verschlüsse für Öffnungen in einer Fahrzeugkarosserie abgedichtet werden. Dabei werden aus passenden Profilen bzw. Profilstücken mehr oder weniger lange Stränge zusammengesetzt, die ein der Umrißform einer Öffnung oder eines die Öffnung verschließenden Verschlußteils entsprechenden Verlauf erhalten, so daß die Profile der Umrißform bzw. Kontur im Dichtungsbereich folgend montierbar sind.

Dies bedingt Profile bzw. Profilstücke zu Dichtungen bzw. Dichtrahmen zusammenzusetzen, wobei das Zusammensetzen mittels entsprechender Stoßverbindungen erfolgt. Entweder werden die Profile bzw. Profilstücke stumpf gestoßen, oder, auf Gehrung geschnitten, in einem vorbestimmten Winkel zusammengesetzt. In den Verbindungsbereichen haben die Profile somit Schnittflächen zu erhalten, die gegenseitig in Anlage gebracht werden können. Um die in Anlage stehenden Schnittflächen dauerhaft miteinander zu verbinden, stehen verschiedene Verfahren zur Verfügung. Ein einfaches Verfahren sieht vor, als Verbindungsmaterial einen Klebstoff anzuwenden, der in den Bindungsspalt zwischen den Schnittflächen eingebracht wird, beispielsweise dadurch, daß die Schnittflächen vor ihrer Zusammenfügung mit flüssigem Klebstoff entsprechend benetzt werden.

Die Methode des Zusammenklebens eignet sich jedoch nicht zur raschen Durchführung in industriellen Maßstäben mit hohen Stückzahlen, da jeder Klebstoff eine entsprechend mehr oder weniger lange Abbindezeit benötigt.

Wird für Dichtungsprofile ein elastomeres Material verwendet, das thermoplastische Eigenschaften hat, läßt sich eine Stoßverbindung gemäß einem anderen Verfahren auch dadurch herstellen, daß die Schnittflächen durch Wärmeeinwirkung angeschmolzen werden und nach dem Aneinanderpressen verschweißt sind, sobald eine entsprechende Erkaltung des Verbindungsbereiches erfolgt ist. Auch ein solches Verbindungsverfahren beansprucht Zeit und insbesondere die kontrollierte, d. h. beherrschbare Wärmebehandlung, die oftmals nur mit entsprechend hohem apparativen und verfahrenstechnischen Aufwand möglich ist.

Es ist auch schon vorgeschlagen worden, als Verbindungsmaterial Einlegestücke zu verwenden, die aus einem Material bestehen, das leichter auf die erforderliche Schweißtemperatur zur Verbindung der Profile erhitzt werden kann. Die Profile mit den dazwischen eingefügten Stücken aus Verbindungsmaterial werden im plastifizierten bzw. plastischen Zustand zusammengedrückt, so daß nach dem Abkühlen eine feste Stoßverbindung hergestellt ist. Auch hier sind die aufzuwendenden Verfahrenszeiten nachteilig, insbesondere die Zeit, die bis zur Abkühlung und Verfestigung der Verbindung vergehen muß, damit die durch Stoßverbindung ausgebildete Dichtung als nunmehr einstückiges Teil handhabbar wird.

Der Erfindung liegt die Aufgabe zugrunde, ein Verfahren zum Stoßverbindung von Profilen zu schaffen, welches rasch durchführbar ist und somit zur Einhaltung kurzer Taktzeiten bei der Herstellung führt.

Diese Aufgabe ist verfahrensmäßig durch die Merkmale des Patentanspruchs 1 gelöst. Weitere verfahrensmäßige Ausgestaltungen ergeben sich aus den Merkmalen der Ansprüche 2 bis 7.

Bei dem erfindungsgemäßen Verfahren wird das Verbindungsmaterial direkt in den Bindungsspalt zwischen den Schnittflächen der miteinander zu verbindenden Enden von Profilen oder Profilstücken gegeben. Das Verbindungsmaterial kann in flüssiger Form bevorratet werden und wird in den Bindungsspalt gedrückt, beispielsweise gespritzt oder extrudiert. Bevorzugt ist das Extrusionsverfahren, wobei das Verbindungsmaterial aus dem in den Bereich des Bindungsspaltes gehaltenen Austrittsmundstück eines Extruders als Film extrudiert wird. Als Werkstoff zur Ausbildung des Verbindungsmaterials kann ein Kunststoff, beispielsweise thermoplastisches Elastomer, PVC oder dergleichen eingesetzt werden, der aufgrund seiner Direkteinbringung in den Bindungsspalt noch mehr oder weniger flüssig bzw. zähflüssig ist, wenn seine Anlage an den Schnittflächen der Verbindungsbereiche erfolgt. Daraus ergibt sich der Vorteil, daß die den Bindungsspalt begrenzenden Schnittflächen der miteinander zu verbindenden Profilen auch unbehandelt, also unvorbereitet dem Verbindungsverfahren zugeführt werden können. Selbstverständlich ist aber auch eine Vorbehandlung durch Temperatur oder Primer möglich.

Das als Film direkt in dem Bindungsspalt extrudierte Verbindungsmaterial ersetzt die bei bekannten Verfahren notwendigen Einlegeplättchen bzw. Einlegefolien, die sich auch von Rollenmagazinen in den Bindungsspalt ziehen lassen.

Im Prinzip wird durch die Erfindung demzufolge ein Verbindungsmaterial erst während seiner Eingabe in den Bindungsspalt ausgeformt, z. B. zum Film, und ist damit nicht vorgefertigt, wie es bei Einlegeplättchen oder Verbindungsfolien der Fall ist.

Das erfindungsgemäße Verfahren ist besonders geeignet, Profile aus beliebigen Werkstoffkombinationen, gegebenenfalls auch Profile mit eingelegten Verstärkungen aus Stahl, Aluminium oder Kunststoff zu verbinden. Auch Profile, die mehrteilig ausgebildet sind und somit beliebige Werkstoffkombinationen in sich vereinen, lassen sich durch das erfindungsgemäße Verfahren problemlos miteinander verbinden, da als direkt in den Bindungsspalt extrudierbares Verbindungsmaterial Werkstoffe eingesetzt werden können, die als besonders verbindungsfreundlich mit den gegebenen Werkstoffen der Profile erkannt sind. Beispielsweise ist als Verbindungsmaterial ein thermoplastisches Elastomer besonders geeignet, da es sich äußerst verbindungsfreundlich verhält, wobei sich die Verbindungsfreundlichkeit auch noch durch die Austrittstemperatur aus dem Extruder, und/oder die Viskosität eines Films und/oder die Dicke des in den Bindungsspalt extrudierten Films beeinflussen läßt.

Sobald der Film aus Verbindungsmaterial in den Bindungsspalt gedrückt, vorzugsweise extrudiert ist, werden die Profile zusammengeführt, bis die Schnittflächen unter beidseitiger Anlage an dem Film aus Verbindungsmaterial zusammengeführt sind. Jedes strangförmige Profil hat eine dem jeweiligen Anwendungsfall entsprechende Formgebung bzw. Außenkontur, über die das in Form eines Films eingebrachte Verbindungsmaterial nach außen vorsteht. Solche über Begrenzungsränder der Schnittflächen vorstehenden Abschnitte des Verbindungsmaterials werden bei dem erfindungsgemäßen Verfahren in einem Arbeitsschritt weggeschnitten, bevor die nunmehr zu einer Dichtung zusammengesetzten Profilstücke einer weiteren Handhabung oder Verwendung zugeführt werden.

Das erfindungsgemäße Verfahren ist bevorzugt geeignet, auch verschiedenfarbige Verbindungsmaterialien zu verarbeiten. Die in dem Bindungsspalt extrudierten Filme können durch mehrlagig aus verschiedenen koextrudierten Lagen gebildet werden. Die Verbindungsmaterialien können farbig oder transparent sein. Jede beliebige Anpassung an den jeweiligen Anwendungsfall läßt sich problemlos herstellen. Auch Umrüstzeiten auf die Verarbeitung anderer Verbindungsmaterialien lassen sich in vorteilhafter Weise gering halten, indem das jeweils gewünschte Verbindungsmaterial verarbeitende Extruder gleichzeitig verarbeitungsbereit gehalten werden und lediglich ihre Extruderköpfe beispielsweise über Ventile angesteuert werden oder bei Bedarfsfall in den Bereich des zu bedienenden Bindungsspaltes überführt werden, z. B. mittels einer entsprechend betätigbaren Mechanik.

Eine zur Durchführung des Verfahrens geschaffene Vorrichtung zeichnet sich erfindungsgemäß durch die Merkmale der Patentansprüche 8 bis 11 aus. Für die Vorrichtungsmerkmale wird auch selbständiger Schutz beansprucht.

Neben dem vorteilhaften Merkmal, daß eine Station der Vorrichtung als Extruder mit entsprechender Extruderdüse zur Einbringung des Verbindungsmaterials in den Bindungsspalt ausgebildet ist, weist die erfindungsgemäße Vorrichtung auch den besonderen Vorteil auf, daß ihre Klemmhalter für die miteinander zu verbindenden Profilstücke mit Schneiden zur Durchführung eines Stanzschnittes bei einer Zusammenfahrbewegung der Klemmhalter ausgerüstet sind. Diese Kombination ermöglicht eine vorteilhafte Doppelfunktion der Klemmhalter, da die Schnittflächen der in den Klemmhaltern gehaltenen Profile, dann, wenn sie unter Einschließung des extrudierten Films aneinandergelegt werden, einen Stanzschnitt ausführen. Durch diesen Stanzschnitt werden über Begrenzungsränder der Schnittflächen der Profile vorstehende Abschnitte des Verbindungsmaterials durch entsprechendes Wegschneiden an Form und Verlauf der Kontur der Profile angepaßt.

Nach dem Abbinden bzw. Erhärten des Verbindungsmaterials sind die Schnittflächen über das Verbindungsmaterial miteinander verbunden, so daß eine Dichtung, z. B. ein einstückiger Dichtungsrahmen, aus der Vorrichtung entnommen werden kann.

Ein Ausführungsbeispiel der Erfindung, aus dem sich weitere erfinderische Merkmale ergeben, ist in der Zeichnung schematisch dargestellt. Es zeigt:
- Fig. 1: eine Prinzipskizze einer für das Aufnehmen zu verbindender Enden von Profilen aus elastomerem Material vorbereiteten Vorrichtung.
- Fig. 2: eine Prinzipskizze gemäß Fig. 1 in dem Verfahrensstadium des Einbringens des Verbindungsmaterials in den Bindungsspalt, und
- Fig. 3: eine prinzipielle Ansicht des Verfahrensschrittes der Schließung der Vorrichtung zwecks Herstellung einer Verbindung zwischen den Profilenden und dem Verbindungsmaterial.

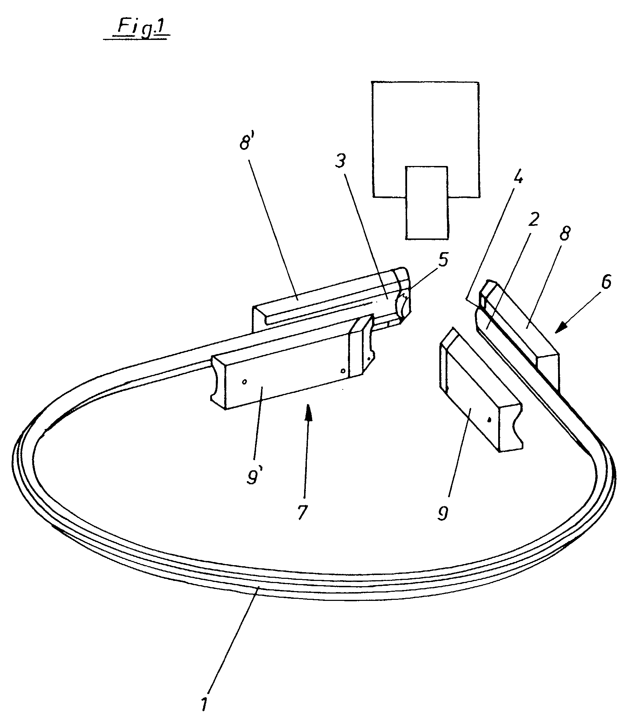

Fig. 1 ist eine Prinzipskizze, in der ein erster Verfahrensschritt zum Stoßverbinden von Profilen dargestellt ist.

Ein Profil ist mit 1 bezeichnet. Die Enden 2 und 3 des Profils 1 weisen stirnseitige Schnittflächen 4 und 5 auf, die mit entsprechenden, hier nicht weiter dargestellten Werkzeugen hergestellt wurden. Die Schnittflächen sind in einem Gehrungsschnitt geführt, so daß die Enden 2 und 3 des Profils 1 bei zusammengeführten Schnittflächen 4 und 5 in einem hier angedeuteten stumpfen Winkel zueinander stehen.

Auf einer hier nicht weiter dargestellten Vorrichtung sind Klemmhalter 6 und 7 aufgebaut. Jeder Klemmhalter besteht aus einer Einlegebacke 8 und einer Schließbacke 9. Diese Bauteile sind bei dem Klemmhalter 7 identisch vorhanden und demzufolge mit 8' und 9' bezeichnet.

In die Einlegebacken 8 bzw. 8' sind die Enden 2 und 3 des Profils 1 jeweils so einlegbar, daß die stirnseitigen Schnittflächen 4, 5 des Profils 1 mit den Stirnflächen der Einlegebacken 8 bzw. 8' bündig liegen. Ein derartiges Einlegen kann z. B. manuell durchgeführt werden.

Sobald die Enden 2, 3 des Profils 1 in die Einlegebacken 8 bzw. 8' wie vorbeschrieben eingelegt sind, wird die Schließbacke 9 bzw. 9' an die Einlegebacke 8 bzw. 8' angelegt, so daß die Enden 2, 3 des Profils 1 in den nunmehr geschlossenen Klemmhaltern 6 und 7 eingespannt gehalten sind.

Die Vorrichtung kann selbstverständlich mit entsprechenden Betätigungsmitteln zum Schließen der Klemmhalter ausgerüstet sein.

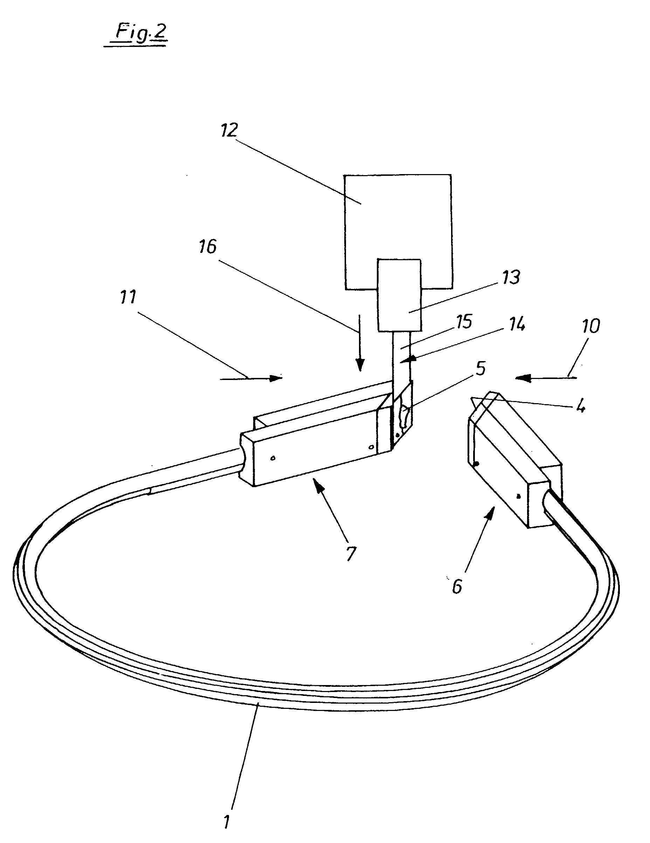

In Fig. 2 ist die Vorrichtung in Form einer Prinzipskizze noch einmal dargestellt, wobei die Klemmhalter gegenüber Fig. 1 nunmehr in der vorbeschriebenen Schließposition dargestellt sind, in der die Enden des Profils 1 in den geschlossenen Klemmhaltern 6 und 7 eingespannt und gehalten sind.

Jeder Klemmhalter 6 und 7 ist an der nicht weiter dargestellten Vorrichtung beweglich angeordnet, so daß die Klemmhalter 6, 7 in Richtung der Pfeile 10 und 11 zusammengefahren werden können, derart, daß die Schnittflächen 4 und 5 der in den Klemmhaltern 6 und 7 gehaltenen Enden z. B. des Profils 1 miteinander in Anlage gebracht werden können. Die hier gezeichnete Position entspricht der Öffnungsstellung, bei welcher der Bindungsspalt zwischen den Schnittflächen 4 und 5 noch relativ weit ist. Die Vorrichtung trägt einen Extruder 12 mit Austrittsdüse 13, die so positioniert ist, daß ihre Ausmündung über dem Bindungsspalt zwischen den Schnittflächen 4 und 5 der in die Klemmhalter 6 und 7 eingelegten Enden z. B. des Profils 1 steht.

Selbstverständlich kann der Extruder 12 auch ein Spritzaggregat sein bzw. ist die hier gezeigte Einrichtung im Grunde genommen eine Apparatur, die in den Bindungsspalt ein flüssiges bzw. pastöses Verbindungsmaterial 14 in Form eines Materialfilms einbringen, z. B. pressen oder drücken kann. Dieser Materialfilm 15 quillt aus der Düse 13 bzw. einem Mundstück in Richtung des Pfeils 16 in den Verbindungsspalt und legt sich dabei vor die Schnittflächen 4 und 5 der in den Klemmhaltern 6 und 7 sitzenden Enden, z. B. des Profils 1.

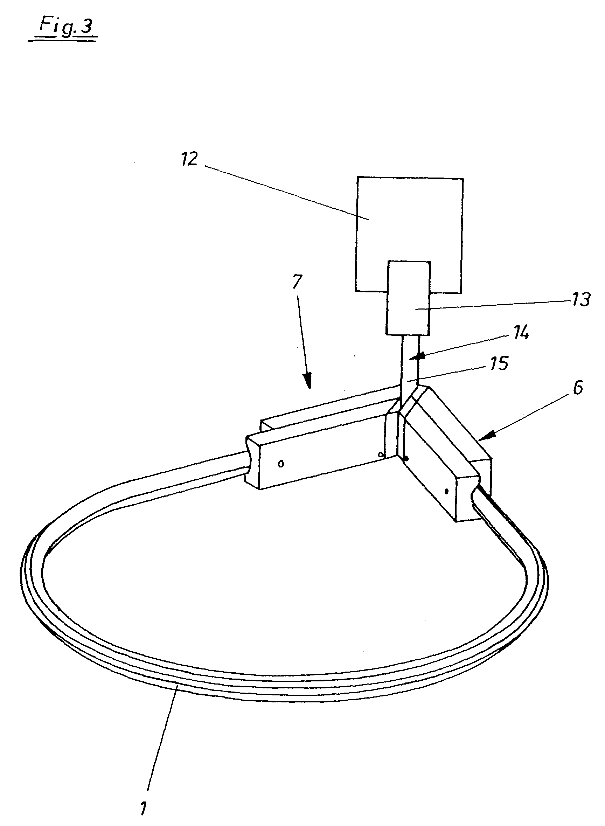

Sodann werden die Klemmhalter 6 und 7 in Richtung der Pfeile 10 und 11 zusammengefahren, wie es in Fig. 3 angedeutet ist. Gleiche Bauteile sind in Fig. 3 mit gleichen Bezugszahlen bezeichnet. Durch das Schließen der Klemmhalter 6 und 7 ist mittels des im Bindungsspalt befindlichen Films 15 aus Verbindungsmaterial 14 eine Verbindung hergestellt, durch die aus dem Profil 1 eine Dichtung, beispielsweise ein einstückiger Dichtungsrahmen gebildet ist.

Die Klemmhalter 6 und 7 sind bei der Vorrichtung so gestaltet, daß sie in der zusammengefahrenen Position, wie sie in Fig. 3 dargestellt ist, den Materialfilm 15 der Kontur des Profils 1 entsprechend ausstanzen, d. h. es werden über Begrenzungsränder der Schnittflächen des Profils 1 vorstehende Abschnitte des Verbindungsmaterials weggeschnitten.

## Patentansprüche

1. Verfahren zum Stoßverbinden von Profilen aus elastomerem Material, insbesondere von Dichtungsprofilen, bei dem die Profile bzw. Profilstücke in den Verbindungsbereichen Schnittflächen erhalten und anschließend einander so angenähert werden, daß zwischen den Schnittflächen ein Bindungsspalt verbleibt, in den ein Verbindungsmaterial eingebracht wird und die Profile anschließend einander weiter angenähert werden, bis ihre Schnittflächen mit dem Verbindungsmaterial in verbindende Anlage gebracht sind,
**dadurch gekennzeichnet,**
**daß** das Verbindungsmaterial (14) in viskosem Zustand direkt in den Bindungsspalt gedrückt wird.

2. Verfahren nach Anspruch 1, **dadurch gekennzeichnet, daß** das Verbindungsmaterial (14) in den Bindungsspalt extrudiert wird.

3. Verfahren nach Anspruch 2, **dadurch gekennzeichnet, daß** das Verbindungsmaterial (14) als Film (15) in den Bindungsspalt extrudiert wird.

4. Verfahren nach einem der Ansprüche 2 und 3, **dadurch gekennzeichnet, daß** wenigstens zwei Verbindungsmaterialien (14) in den Bindungsspalt koextrudiert werden.

5. Verfahren nach einem der Ansprüche 1 bis 4, **dadurch gekennzeichnet, daß** als Verbindungsmaterial ein thermoplastisches Elastomer (TPE) verwendet wird.

6. Verfahren nach einem der vorhergehenden Ansprüche, **dadurch gekennzeichnet, daß** über Begrenzungsränder der Schnittflächen (4, 5) des Profils (1) bzw. der Profilstücke vorstehende Abschnitte des Verbindungsmaterials (14) weggeschnitten werden.

7. Verfahren nach Anspruch 6, **dadurch gekennzeichnet, daß** über Begrenzungsränder der Schnittflächen (4, 5) vorstehende Abschnitte des Verbindungsmaterials (14) in dem Moment weggeschnitten werden, indem die Schnittflächen (4, 5) des Profils (1) einander derart angenähert sind, daß verbindende Anlage mit dem Verbindungsmaterial (14) gegeben ist.

8. Vorrichtung zur Durchführung des Verfahrens nach einem der Ansprüche 1 bis 7, mit einem Paar zwecks gegenseitiger Annäherung beweglich geführter Klemmhalter, in welche die Profile so einlegbar sind, daß ihre vorbereiteten Schnittflächen einander zugekehrt sind und mit einer Einrichtung zur Einbringung eines Verbindungsmaterials in den Bindungsspalt zwischen den einander angenäherten Schnittflächen der in die Klemmhalter eingelegten Profile,
**dadurch gekennzeichnet,**
**daß** die Einrichtung zur Einbringung des Verbindungsmaterials (14) einen Extruder (12) umfaßt, sowie eine auf den Bindungsspalt ausgerichtete Düse (13).

9. Vorrichtung nach Anspruch 8, **dadurch gekennzeichnet, daß** die Düse (13) als das Verbindungsmaterial in Form eines Films (15) extrudierende Schlitzdüse ausgebildet ist.

10. Vorrichtung nach einem der Ansprüche 8 und 9, **dadurch gekennzeichnet, daß** jeder Klemmhalter (6, 7) ein Paar das zugeordnete Profil (1) formschlüssig aufnehmender Klemmbacken (8, 8') mit zugehörigen Schließbacken (9, 9') aufweist.

11. Vorrichtung nach Anspruch 10, **dadurch gekennzeichnet, daß** die Klemmhalter (6, 7) an Stirnflächen den bei geschlossenem Bindungsspalt aneinanderliegenden Schließflächen (4, 5) fluchten, mit Schneiden ausgerüstet sind, deren Form und Verlauf der Kontur der Profile (1) entspricht.
